# EUROPÄISCHE PATENTSCHRIFT

(11) **EP 1 442 247 B1**
(45) Veröffentlichungstag und Bekanntmachung des Hinweises auf die Patenterteilung: **19.10.2005**
(21) Anmeldenummer: 02802640.9
(22) Anmeldetag: 02.11.2002
(51) Int. Cl.: F16M 11/04, F16M 11/12, B60R 11/02

(54) **HALTERUNG MIT MINDESTENS EINEM SAUGELEMENT**
HOLDING IMPLEMENT COMPRISING AT LEAST ONE SUCTION ELEMENT
SYSTEME DE RETENUE MUNI D'AU MOINS UN ELEMENT D'ASPIRATION

(30) Priorität: 06.11.2001 DE 10154881; 14.03.2002 DE 10212347
(43) Veröffentlichungstag der Anmeldung: 04.08.2004
(73) Patentinhaber: Finkbeiner, Bernd, 71287 Weissach (DE)
(72) Erfinder: Finkbeiner, Bernd, 71287 Weissach (DE)
(74) Vertreter: Hellwig, Tillmann Johannes
(86) Internationale Anmeldenummer: PCT/EP2002/012249
(87) Internationale Veröffentlichungsnummer: WO 2003/040608

(56) Entgegenhaltungen:
- GB-A- 2 222 939
- US-A- 5 025 919
- US-A- 5 098 053
- US-A- 5 207 471
- US-A- 6 155 469
- US-B1- 6 244 553

## Beschreibung

Die Erfindung betrifft eine Halterung mit mindestens einem Saugelement zur lösbaren Befestigung der Halterung an einer geeigneten Oberfläche, insbesondere einer glatten, gasdichten und formstabilen Oberfläche, wie z.B. Glas, und mit einer Ablage, wobei die relative Lage des mindestens einen Saugelements zu der Ablage einstellbar ist.

Solche Halterungen sind beispielsweise aus der gattungsgemäßen US 5,025,919 bekannt. In der Druckschrift wird eine Halterung für ein Laptop od.dgl. beschrieben, welches einenends mit einem Saugelement an der Windschutzscheibe eines Kraftfahrzeugs bevorzugt wird und sich anderenends auf dem Armaturenbrett vorne abstützt. Dadurch ist zwar eine lösbare Befestigung einer mobilen Halterung gegeben, allerdings kann die Position der Halterung nicht mehr eingestellt werden, wenn das Saugelement an der Windschutzscheibe befestigt ist und das andere Ende der Halterung auf dem Armaturenbrett aufliegt. Deshalb ist es sehr mühsam diese Halterung sicher und gleichzeitig in einer für den Benutzer derselben geeigneten Position zu befestigen.

Aus der US 6155469 ist ein Notebook-Halter bekannt, der ein einziges Saugelement aufweist, das an der Windschutzscheibe eines Kraftfahrzeugs angebracht werden kann. Mit dem Saugelement ist eine Ablagevorrichtung fest verbunden, in der beispielsweise ein Stift oder andere Büromaterialien abgelegt werden können. Es soll, ausweislich der genannten Patentschrift, auch möglich sein, in dieser Halterung ein Notebook abzulegen. Allerdings ist, wegen der extrem ungünstigen Hebelverhältnisse zu befürchten, dass beispielsweise beim Überfahren eines Schlaglochs oder einer Bodenwelle das Saugelement die auftretenden Kräfte nicht sicher übertragen kann und das auf der Halterung abgelegte Gerät herunterfällt.

Aus der US 5,207,471 ist eine Halterung für Notebooks bekannt, welche beispielsweise an einer Kopfstütze der Vordersitze eines Kraftfahrzeugs eingehängt werden kann, so dass der im Fond des Fahrzeugs sitzende Benutzer dieser Halterung sein Notebook auf dieser ablegen kann und somit während der Fahrt arbeiten kann. Auch bei dieser Halterung sind sehr spezielle Voraussetzungen hinsichtlich der Befestigungsmöglichkeiten der Halterung erforderlich und die Halterung ist nur von den Fondpassagieren nutzbar.

Der Erfindung liegt die Aufgabe zugrunde, eine Halterung zu schaffen, die einfach, sicher und flexibel an verschiedensten Gegenständen befestigt werden kann und die ein Einstellen der zur Halterung gehörenden Ablage nach den individuellen Gegebenheiten und Wünschen des Benutzers ermöglicht. Außerdem soll die Halterung nach erfolgtem Einsatz wieder einfach von dem Gegenstand, an dem sie befestigt war, lösbar sein.

Dabei ist der Einsatz der Halterung nicht auf die Ablage Geräts oder Notebooks beschränkt, sondern es können auch Messgeräte, elektronische Schaltungen, die nur zeitweise an einem bestimmten Ort benötigt werden, und andere, vorzugsweise teure, stoßempfindliche und handliche Geräte auf der erfindungsgemäßen Halterung abgelegt werden. Im Zusammenhang mit der Erfindung wird nachfolgend unter dem Begriff "Gerät" jeder transportable Rechner - auch als Notebook oder Laptop bezeichnet - und jedes Gerät, welches mobil oder stationär einsetzbar ist und während seines Einsatzes sicher und gegen Erschütterungen geschützt in einer bestimmten, einstellbaren Position abgelegt werden soll, verstanden. So ist beispielsweise auch ein Gerät zum Messgerät oder ein Gerät zur Vor-Ort-Programmierung von Speicherprogrammierung von Maschinen- oder Anlagensteuerungen ein Gerät im Sinne der Erfindung.

Die oben genannte Aufgabe wird erfindungsgemäß bei einer Halterung mit mindestens einem Saugelement zur lösbaren Befestigung der Halterung an einer geeigneten Oberfläche, insbesondere einer glatten, gasdichten und formstabilen Oberfläche, und mit einer Ablage, wobei die Lage des mindestens einen Saugelements und der Ablage zueinander einstellbar ist, dadurch gelöst, dass das mindestens eine Saugelement und die Ablage durch eine obere Strebe und eine im Wesentlichen parallel dazu verlaufende untere Strebe gelenkig miteinander verbunden sind und dass Mittel zum Federn und/oder Dämpfen der Relativbewegung zwischen Ablage und Saugelement vorhanden sind.

Durch die parallelogrammartige gelenkige Verbindung zwischen Saugelement und Ablage kann die Ablage Stöße oder Schwingungen, welche über das Saugelement auf die Ablage übertragen werden, abfedern und dämpfen, so dass das Gerät diesen Stößen und Schwingungen nicht oder nur in deutlich reduziertem Umfang ausgesetzt ist. Wegen der parallelogrammartigen Verbindung zwischen Saugelement und Ablage führt eine Feder- oder Dämfungsbewegung nur zu einer Parallelverschiebung des Geräts relativ zum Betrachter, so dass die Ablesbarkeit eines eventuell vorhanden Bildschirms und die Erreichbarkeit einer möglicherweise vorhanden Tastatur nur in geringem Umfang durch die Feder- oder Dämpfungsbewegung beeinträchtigt wird. Diese Feder- und Dämpfungsbewegung der Ablage reduziert auch die auf das Saugelement wirkenden dynamischen Belastungen, so dass das Saugelement noch sicherer an der Oberfläche haften bleibt.

Bei einer Variante der Erfindung ist vorgesehen, dass das Saugelement mit einer Grundplatte fest verbunden ist, und dass die obere Strebe und die untere Strebe mindestens mittelbar in der Grundplatte drehbar gelagert sind, so dass die von oberer und unterer Strebe in das Saugelement eingeleiteten Kräfte nicht zu lokalen Überlastungen des Saugelements führen und außerdem die Steifheit der Halterung und damit auch deren Belastbarkeit erhöhen.

Zur Verbesserung der Einstellbarkeit der erfindungsgemäßen Halterung ist weiter vorgesehen, dass an der Grundplatte eine drehbar gelagerte dritte Strebe angeordnet ist, und dass die obere Strebe und die untere Strebe in der dritten Strebe gelagert sind.

In weiterer Ergänzung kann vorgesehen sein, dass Mittel zum Arretieren der dritten Strebe relativ zur Grundplatte vorgesehen sind, und dass die Mittel zum Arretieren der dritten Strebe eine fest mit der dritten Strebe verbundene Klemmscheibe und einen an der Grundplatte befestigten Klemmhebel aufweisen, und dass mit dem Klemmhebel ein Reibschluss zwischen Klemmscheibe und Grundplatte herstellbar ist, so dass die vom Benutzer für angenehm erachtete Position der Halterung nach dem Anbringen des Saugelements an einer geeigneten Oberfläche einstellbar ist und anschließend fixiert werden kann.

Weitere Ausgestaltungen der Erfindung sehen vor, dass die Ablage mit einer vierten Strebe verbunden ist, und dass die obere Strebe und die untere Strebe in der vierten Strebe gelagert sind, so dass sich im Zusammenspiel mit der dritten Strebe ein Parallelogramm ergibt, das bekanntermaßen sehr belastbar ist und dennoch ausreichende Einstellmöglichkeiten hinsichtlich der Höhe der Ablage und Freiheitsgrade zum Ausfedern von Fahrbahnunebenheiten oder sonstigen Stößen, die über das Saugelement in die Halterung eingeleitet werden, aufweist.

Es hat sich auch als vorteilhaft erwiesen, wenn die vierte Strebe mit der Ablage drehbar verbunden ist, und Mittel zum Arretieren der Ablage relativ zur vierten Strebe vorgesehen sind, so dass auch die Position der Ablage relativ zu den Streben einstellbar ist und sich somit weitere Einstellmöglichkeiten der Ablage ergeben. Eine mögliche Ausgestaltung der Mittel zum Arretieren der vierten Strebe an der Ablage sieht eine an der vierten Strebe angeordnete Flügelmutter vor, mit der ein Reibschluss zwischen vierter Strebe und Ablage herstellbar ist.

Das erfindungsgemäße Saugelement kann entweder mechanisch, beispielsweise mit einem Spannhebel und/oder mit einer elektrisch angetriebenen Vakuumpumpe an einer geeigneten Oberfläche fixiert werden. Wenn eine Vakuumpumpe zum Befestigen des Saugelements an der Oberfläche benutzt wird, empfiehlt es sich, einen elektrischen Antrieb, der von einer Batterie oder Akkumulatoren gespeist wird, einzusetzen, da in diesem Fall die Halterung ohne Verkabelungsaufwand an jeder geeigneten Oberfläche befestigt werden kann.

Um die Sicherheit der Befestigung der Halterung an der geeigneten Oberfläche über lange Zeiträume sicherstellen zu können, kann ein Drucksensor vorgesehen sein, der den zwischen Oberfläche und Saugelement herrschenden Unterdruck misst und beim Erreichen eines vorgegebenen Grenzwerts die elektrisch angetriebene Vakuumpumpe so lange einschaltet, bis wieder ein ausreichend niedriger Unterdruck erreicht wurde. Durch diese Zweipunktregelung der Vakuumpumpe kann die sichere Befestigung der Halterung an einer geeigneten Oberfläche für Wochen oder sogar Monate gewährleistet werden. Es hat sich in praktischen Versuchen herausgestellt, dass die Vakuumpumpe nur ungefähr alle ein bis zwei Tage einmal eingeschaltet werden muss, um für die nächsten ein bis zwei Tage einen ausreichend großen Unterdruck zwischen Oberfläche und Saugelement herzustellen. Zur Erzeugung des notwendigen Unterdrucks haben sich Membran-Pumpen bewährt.

Geeignete Mittel zum Federn oder Dämpfen sind eine Gasfeder oder eine Spiralfeder. Dabei hat es sich als vorteilhaft erwiesen, wenn die Mittel zum Federn und/oder Dämpfen sich mindestens mittelbar gegen die Grundplatte und gegen die obere Strebe oder die untere Strebe abstützen. Alternativ können sich die Mittel zum Federn und/oder Dämpfen auch gegen die obere Strebe und die untere Strebe abstützen. Eine weitere Alternative sieht vor, dass sich die Mittel zum Federn und/oder Dämpfen auch gegen die dritte Strebe und die vierte Strebe abstützen.

Eine weitere Einstellmöglichkeit der Ablage besteht darin, dass die Abstützpunkte der Mittel zum Federn und/oder Dämpfen an der Grundplatte und/oder an der oberen Strebe oder an der unteren Strebe einstellbar sind. Dadurch kann vor allem die die Höhe der Ablage eingestellt werden. Durch die geänderten Hebelverhältnisse können aber auch Federung und Dämpfung eingestellt werden.

Zur weiteren Verbesserung der Einstellbarkeit der erfindungsgemäßen Halterung kann die Länge der oberen Strebe und/oder die Länge der unteren Strebe einstellbar sein. Durch diese Maßnahme kann die Neigung der Ablage relativ zum Saugelement auf nahezu jeden gewünschten Winkel eingestellt werden.

Um die Befestigung der Halterung an einer Oberfläche weiter zu verbessern, kann vorgesehen sein, dass sich die Grundplatte mit ihrem dem Saugelement abgewandten Ende, insbesondere an der geeigneten Oberfläche, an der das Saugelement befestigt ist, abstützt. Dadurch wird das Saugelement nicht mehr auf Schub beansprucht, auch eine Schälbeanspruchung des Saugelements tritt nicht mehr auf. Die auf das Saugelement wirkende Kraft verläuft nun normal zu der Oberfläche, auf die das Schaltelement aufgesetzt wurde. Diese Belastungsrichtung ist für ein Saugelement optimal.

Alternativ kann die Grundplatte auch einen in seiner Länge verstellbaren Stützfuß aufweisen, so dass sich die Grundplatte über den Stützfuß nach unten abstützen kann. Diese Alternative ist beispielsweise bei der Befestigung der Halterung an der Windschutzscheibe eines Lkw's besonders geeignet, wenn der Stützfuß sich auf dem Armaturenbrett des Lkw's abstützen kann. Gleiches gilt für die Befestigung einer Halterung an einer glatten Oberfläche einer Werkzeugmaschine od.dgl., wobei sich der Stützfuß dann auf dem Fußboden abstützt.

Als Saugelement wird im Zusammenhang mit der Erfindung eine Einrichtung, wie sie beispielsweise zum Transportieren von großen und schweren Glasscheiben eingesetzt wird, verstanden. Diese Einrichtungen weisen mindestens ein in der Regel kreisförmiges Gummielement auf, welches an seinem Rand als Dichtlippe ausgebildet ist. Durch einen an der Rückseite des Gummielements angreifenden Spannhebel kann das Gummielement von der geeigneten Oberfläche auf welche die Dichtlippe aufgesetzt wurde, abgezogen werden, so dass sich ein Unterdruck in dem Zwischenraum zwischen der Oberfläche und dem Gummiteil einstellt, der die Befestigung des Saugelements an der Oberfläche bewirkt. Ein solches Saugelement wird beispielsweise von der Firma Bohne AG unter der Bestellnummer B 06100.15 hergestellt und vertrieben.

Weitere Vorteile und vorteilhafte Ausgestaltungen der Erfindung sind der nachfolgenden Zeichnung, deren Beschreibung und den Patentansprüchen entnehmbar.

In der Zeichnung zeigen:
- Fig. 1:: eine perspektivische Darstellung eines Ausführungsbeispiels einer erfindungsgemäßen Halterung;
- Fig. 2:: das Ausführungsbeispiel gemäß Fig. 1 in einer Seitenansicht; und
- Fig. 3:: das Ausführungsbeispiel gemäß Fig. 1 in einer Ansicht von vorne.

### Beschreibung des Ausführungsbeispiels

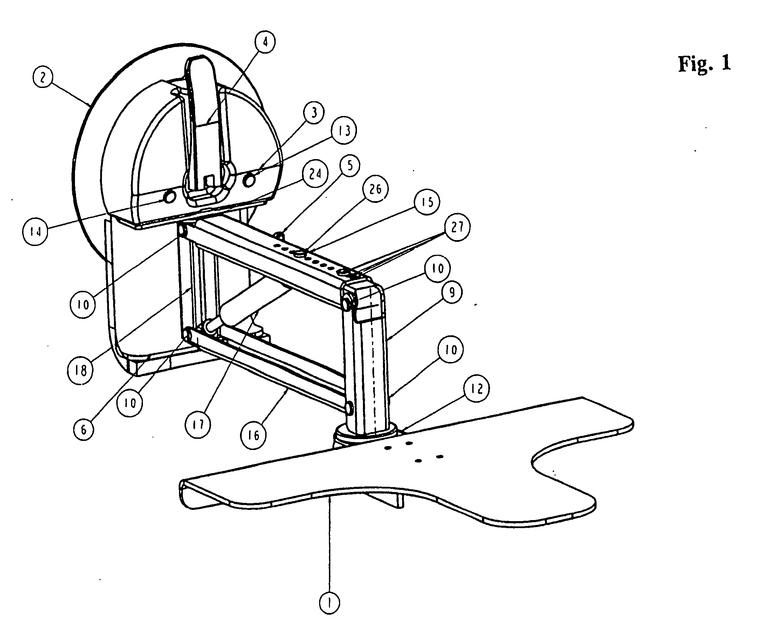

Fig. 1 zeigt eine erfindungsgemäße Halterung, die eine Ablage 1 aufweist auf der beispielsweise ein nicht dargestelltes Gerät abgestellt werden kann. Die Ablage 1 ist über mehrere Gelenke und eine Parallelogrammführung, die nachfolgend noch im Detail erläutert werden, mit einem Saugelement 2 gekoppelt. Das Saugelement 2 besteht im Wesentlichen aus einem Gummiteil, welches beispielsweise mittels eines Spannhebels 4 in Richtung der Ablage 1 gezogen werden kann. Wenn nun das Saugelement 2 auf eine in Fig. 1 nicht dargestellte ebene, glatte und formstabile Oberfläche, wie beispielsweise eine Glasscheibe, aufgesetzt wird und anschließend der Spannhebel 4 in die in Fig. 1 dargestellte Position gebracht wird, wird das Saugelement 2 von der nicht dargestellten Oberfläche weggezogen, so dass sich ein Unterdruck in dem dabei entstehenden Zwischenraum (nicht dargestellt) zwischen Oberfläche und Saugelement 2 einstellt. Infolgedessen drückt der umgebende Luftdruck das Saugelement 2 an die Oberfläche (nicht dargestellt) und die erfindungsgemäße Halterung ist an der nicht dargestellten Oberfläche befestigt.

Durch Schwenken des Spannhebels 4 um 90° in Richtung der Ablage 1 bewegt sich das Spannelement 2 in Richtung der nicht dargestellten Oberfläche, der Unterdruck im Zwischenraum zwischen Oberfläche und Saugelement 2 nimmt ab und die erfindungsgemäße Halterung kann von der Oberfläche abgenommen werden. Das Wirkprinzip des Saugelements 2 ist hinlänglich bekannt und wird deshalb nicht weiter erläutert. Eine sehr häufige Anwendung dieser Saugelemente ist beim Transport von großen und schweren Glasscheiben.

Unter einem Gehäuse 3 ist eine kleine elektrische Vakuumpumpe, die batteriebetrieben ist, angeordnet. Vakuumpumpe und Batterien sind unter dem Gehäuse 3 verborgen. Über einen Schalter 14 kann die Vakuumpumpe in Betrieb genommen werden. Die eingeschaltete Vakuumpumpe (nicht dargestellt) saugt Luft aus dem Zwischenraum zwischen Oberfläche (ebenfalls nicht dargestellt) und Saugelement 2, so dass der Druck in diesem Zwischenraum weiter absinkt und die Befestigung des Saugelements 2 an der Oberfläche noch belastbarer wird. Eine Kontrollleuchte 13, die beispielsweise als ein- oder mehrfarbige Leuchtdiode ausgeführt sein kann, zeigt den Betriebszustand der Vakuumpumpe und/oder den Ladezustand der Akkumulatoren an. Durch beispielsweise eine Zweipunktregelung der Vakuumpumpe kann gewährleistet werden, dass der Unterdruck im Zwischenraum zwischen Saugelement 2 und Oberfläche (nicht dargestellt) immer in einem Bereich von beispielsweise 0,4 - 0,7 bar absolut liegt. Sobald der Druck über 0,7 bar ansteigt, wird die Vakuumpumpe eingeschaltet und erst wieder ausgeschaltet, wenn ein Druck von 0,4 bar erreicht wurde. Es hat sich in praktischen Versuchen herausgestellt, dass bei dieser Zweipunktregelung die Vakuumpumpe nur etwa alle ein bis zwei Tage einmal eingeschaltet werden muss. Infolgedessen kann auch mit einer kleinen Vakuumpumpe und relativ kleinen Batterien die sichere Befestigung der Halterung an einer Oberfläche für lange Zeiten, wie beispielsweise mehrere Wochen oder sogar mehrere Monate, gewährleistet werden.

Das Saugelement 2 ist wiederum an einer Grundplatte 6, die beispielsweise aus Blech oder einem anderen formstabilen Material besteht, so befestigt, dass die von der Ablage 1 auf das Saugelement 2 zu übertragenden Kräfte über die Grundplatte 6 sicher in das Saugelement 2 eingeleitet werden können. An der Grundplatte 6 ist ein Parallelogramm, bestehend im Wesentlichen aus einer oberen Strebe 15, einer unteren Strebe 16 sowie einer vierten Strebe 9, und einer dritten Strebe 18 gelenkig befestigt. Die vier Gelenke dieses Parallelogramms sind in Fig. 1 mit dem Bezugszeichen 10 versehen. Die Gelenke 10 können beispielsweise durch Bolzen, Stifte oder Nieten in an sich bekannter Weise gebildet werden.

Das aus den vier Streben 9, 15, 16, und 18 gebildete Parallelogramm ist relativ zur Grundplatte 6 schwenkbar mit dieser verbunden. Der Schwenkbereich ist in Fig. 1 mit dem Bezugszeichen 23 gekennzeichnet. Die Drehung des Parallelogramms relativ zur Grundplatte 6 kann durch einen Klemmhebel 5, welcher einen Reibschluss zwischen der Grundplatte 6 und einer Klemmscheibe 24, die drehfest mit dem Parallelogramm verbunden ist, hergestellt, arretiert werden.

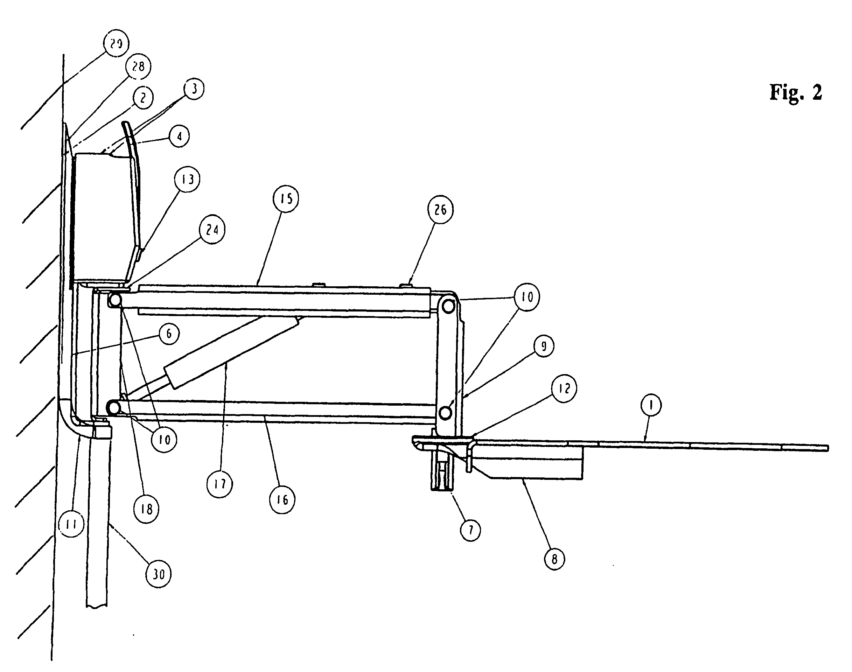

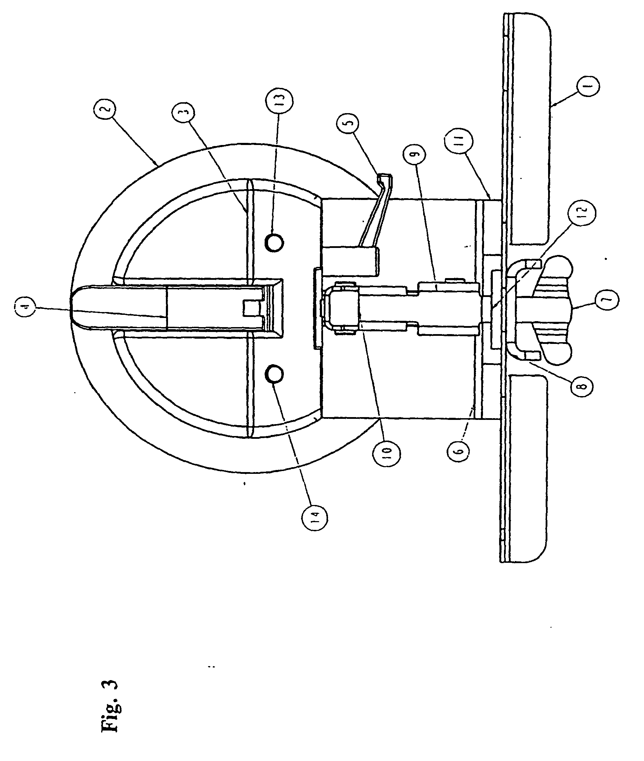

Die Ablage 1 ist relativ zur vierten Strebe 9 ebenfalls schwenkbar angeordnet. Der zugehörige Schwenkbereich ist durch das Bezugszeichen 25 in Fig. 1 angedeutet. Die Ablage 1 kann relativ zur vierten Strebe 9 arretiert werden. Die Funktionsweise dieser Arretierung wird unten anhand der Figuren 2 und 3 erläutert werden.

Wie aus Fig. 1 andeutungsweise ersichtlich, kann die Länge der oberen Strebe 15 eingestellt werden. Dies kann dadurch erreicht werden, dass die obere Strebe teleskopartig ausgeführt wird und die beiden Teile der oberen Strebe 15 in verschiedenen Positionen mit Hilfe einer Schraube 26 zusammengeschraubt und zueinander fixiert werden können. Die Löcher 27 in der Nähe der Schraube 26 deuten die verschiedenen Einstellmöglichkeiten der Länge der oberen Strebe 15 an. Natürlich ist es auch möglich die untere Strebe in der Länge verstellbar auszuführen (nicht dargestellt).

Wenn die erfindungsgemäße Halterung mit dem Saugelement 2 an einer (nicht dargestellten) geeigneten Oberfläche, insbesondere einer Glasscheibe, befestigt wird, kann die Ablage 1 durch die oben geschilderten vielfältigen Verstell- und Arretiermöglichkeiten in nahezu jeder Position eingestellt und anschließend arretiert werden, so dass ein nicht dargestelltes Gerät, das auf der Ablage 1 abgelegt werden soll, in nahezu jeder Stellung von der Halterung gehalten wird.

In Fig. 2 ist eine Seitenansicht des erfindungsgemäßen Ausführungsbeispiels dargestellt. Aus dieser Ansicht können verschiedene konstruktive Details der erfindungsgemäßen Halterung genauer erkannt werden. Aus Fig. 2 ist beispielsweise ersichtlich, dass die Grundplatte 6 nahezu bis zu der Dichtlippe 28 des Saugelements 2 heruntergezogen ist, so dass die Dichtlippe 28 und das dem Saugelement 2 abgewandte Ende der Grundplatte 6 nahezu eine Ebene bilden. Dadurch kann sich das dem Saugelement 2 abgewandte Ende der Grundplatte 6 an der gleichen Oberfläche 29 abstützen, an dem das Saugelement 2 befestigt ist. Darüber hinaus ist in Fig. 2 auch zu erkennen, dass an dem dem Saugelement 2 abgewandten Ende der Grundplatte 6 ein Moosgummi 11 angeordnet ist, so dass die Oberfläche 29 nicht beschädigt wird, wenn sich das von dem Moosgummi 12 geschützte Ende der Grundplatte 6 gegen die Oberfläche 29 abstützt.

Alternativ kann sich die Grundpaltte 6 auch nach unten über einen vorzugsweise längenverstellbaren Stützfüß 30 abstütztn. Diese Art der Abstützung ist bei der Befestigung der Halterung an der Windschutzscheibe eines LKW's besonders geeignet, da sich der Stützfuß in diesem Fall gut auf dem Armaturenbrett abstützen kann.

Besonders geeignet zum Befestigen der erfindungsgemäßen Halterung sind z. B. Glasscheiben oder ein Metallgehäuse einer Maschine u.a.m.. Wenn sich die Grundplatte 6 an der Oberfläche 29 abstützt, wirken auf das Saugelement 2 nur noch Kräfte in Richtung der Normalen zur Oberfläche 29 an der die Halterung befestigt ist. Diese Art der Belastung ist für das Saugelement 2 besonders günstig. An dem dem Saugelement 2 abgewandten Ende der Grundplatte 6 ist diese abgewinkelt und nimmt eine vierte Strebe 9 auf. Die vierte Strebe 9 ist ihrem in Fig. 2 oberen und unteren Ende drehbar in der Grundplatte 6 gelagert. Die Details dieser Lagerung sind in Fig. 2 nicht erkennbar. Aus Fig. 2 ist jedoch deutlich zu erkennen, dass die obere Strebe 15 und die untere Strebe 16 an der dritten Strebe 18 angelenkt sind. Die Klemmscheibe 24 ist fest mit der dritten Strebe 18 verbunden, so dass durch ein Anpressen der Klemmscheibe 24 an der Grundplatte 6 die Ablage 1 arretiert werden kann.

In Fig. 2 ist auch deutlich zu erkennen, dass die obere Strebe 15 teleskopartig ausgebildet ist. Durch Ändern der Länge der oberen Strebe 15 kann der Winkel, unter dem die Ablage 1 sich zur Grundplatte 6 bzw. der Oberfläche 29 befindet, eingestellt werden. Dadurch erhält das auf der Ablage 1 befindliche Gerät (beide nicht dargestellt) die gewünschte Neigung. Zum Einstellen der Länge der oberen Strebe 15 kann beispielsweise die Schraube 26 entfernt werden, so dass die obere Strebe 15 in ihrer Länge geändert wird, und die Schraube 26 anschließend wieder eingesetzt werden. Durch anschließende Eindrehen der Schraube 26 wird die eingestellt Länge der oberen Strebe 15 fixiert.

In Fig. 2 ist eine Flügelmutter 7 dargestellt, mit der die Ablage 1 gegen die vierte Strebe 9 geklemmt werden kann. Dadurch wird ein Schwenken der Ablage 1 relativ zur vierten Strebe 9 verhindert und die Ablage 1 ist relativ zu dem aus oberer Strebe 15, unterer Strebe 16, dritter Strebe 18 und vierter Strebe 9 gebildeten Parallelogramm fixiert.

Zwischen der oberen Strebe 15 und der dritten Strebe 18 ist eine Gasfeder 17 angeordnet, welche Relativbewegungen zwischen Ablage 1 und Saugelement 2 in der in Fig. 2 vertikalen Richtung gleichzeitig federt und dämpft. Dadurch werden Stöße, die ansonsten auf die Ablage 1 einwirken würden, gefedert und gedämpft, so dass das auf der Ablage befindliche Gerät geschont wird. Außerdem werden dadurch die auf das Saugelement 2 wirkenden Kräfte verringert. Anstelle einer Gasfeder 17 kann natürlich auch ein Stoßdämpfer oder eine konventionelle Spiralfeder eingesetzt werden. Es ist auch nicht zwingend erforderlich, dass sich die Mittel zum Federn und/oder Dämpfen der Relativbewegung zwischen Ablage 1 und Saugelement 2 an der oberen Strebe 15 und der dritten Strebe 18 abstützen. Alternativ können die Mittel zum Federn und/oder Dämpfen auch auf Zug aufgelegt sein und sich somit zwischen unterer Strebe 16 und dritter Strebe 18 eingespannt sein. Es ist auch möglich, dass die Mittel zum Federn und/oder Dämpfen zwischen der oberen Strebe 15 und der unteren Strebe 16 oder zwischen dritter Strebe 18 und vierter Strebe 9 angeordnet sind.

In Fig. 3 ist eine Ansicht von vorne des Ausführungsbeispiels gemäß der Fig. 1 und 2 dargestellt. In dieser Ansicht sind der Spannhebel 4, das Saugelement 2, die vierte Strebe 9 und die Ablage 1 sehr gut zu erkennen. Gut zu erkennen ist auch, dass die Flügelmutter 7 die Ablage 1 gegen einen Ring 12, der fest mit der vierten Strebe 9 verbunden ist, presst und somit den gewünschten Reibschluss herstellt, wenn die Ablage 1 relativ zur vierten Strebe 9 arretiert werden soll. In Fig. 3 ist auch erkennbar, dass die Ablage 1 auf einem Trägerblech 8 aufliegt, welches der Verstärkung dient.

## Patentansprüche

1. Halterung mit mindestens einem Saugelement (2) zur Befestigung der Halterung an einer geeigneten Oberfläche (29), insbesondere einer glatten, gasdichten und formstabilen Oberfläche, und mit einer Ablage (1), wobei die relative Lage des mindestens einen Saugelements (2) und der Ablage (1) zueinander einstellbar ist, **dadurch gekennzeichnet, dass** das mindestens eine Saugelement (2) und die Ablage (1) durch eine obere Strebe (15) und eine im wesentlichen parallel dazu verlaufende untere Strebe (16) gelenkig miteinander verbunden sind, und dass ein Mittel (17) zum Federn und/oder Dämpfen der Relativbewegung zwischen Ablage (1) und Saugelement (2) vorhanden ist.

2. Halterung nach Anspruch 1, **dadurch gekennzeichnet, dass** das Saugelement (2) mit einer Grundplatte (6) fest verbunden ist, und dass die obere Strebe (15) und die untere Strebe (16) mindestens mittelbar in der Grundplatte (6) drehbar gelagert sind.

3. Halterung nach Anspruch 2, **dadurch gekennzeichnet, dass** an der Grundplatte (6) eine drehbar gelagerte dritte Strebe (18) angeordnet ist, und dass die obere Strebe (15) und die untere Strebe (16) in der dritten Strebe (18) drehbar gelagert (21, 22) sind.

4. Halterung nach Anspruch 3, **dadurch gekennzeichnet, dass** Mittel zum Arretieren der dritten Strebe (18) relativ zur Grundplatte (6) vorgesehen sind.

5. Halterung nach Anspruch 4, **dadurch gekennzeichnet, dass** die Mittel zum Arretieren der dritten Strebe (18) eine fest mit der dritten Strebe (18) verbundene Klemmscheibe (24)und einen an der Grundplatte (6) befestigten Klemmhebel (5) aufweist, und dass mit dem Klemmhebel ein Reibschluß zwischen Klemmscheibe (24) und Grundplatte (6) herstellbar ist.

6. Halterung nach einem der vorhergehenden Ansprüche, **dadurch gekennzeichnet, dass** die Ablage (1) mit einer vierten Strebe (9) verbunden ist, und dass die obere Strebe (15) und die untere Strebe (16) in der vierten Strebe (6) drehbar gelagert (10) sind.

7. Halterung nach Anspruch 6, **dadurch gekennzeichnet, dass** die Ablage (1) relativ zur vierten Strebe (9) drehbar mit dieser verbunden ist, und dass Mittel zum Arretieren der Ablage (1) relativ zur vierten Strebe (9) vorgesehen sind.

8. Halterung nach Anspruch 7, **dadurch gekennzeichnet, dass** die Mittel zum Arretieren der vierten Strebe (18) eine an der vierten Strebe (9) angeordnete Flügelmutter (7) umfassen, und dass mit der Flügelmutter (7) ein Reibschluß zwischen vierter Strebe (9) und Ablage (1) herstellbar ist.

9. Halterung nach einem der vorhergehenden Ansprüche, **dadurch gekennzeichnet, dass** das oder die Saugelemente (2) mechanisch (4) und/oder mit einer Vakuumpumpe, insbesondere einer oder mehreren batteriebetriebenen elektrischen Vakuumpumpen, an einer geeigneten Oberfläche (29) fixierbar sind.

10. Halterung nach einem vorhergehenden Ansprüche, **dadurch gekennzeichnet, dass** die Mittel zum Federn und/oder Dämpfen der Relativbewegung zwischen Ablage (1) und Saugelement (2) eine Gasfeder (17) oder eine Spiralfeder umfassen.

11. Halterung nach einem der vorhergehenden Ansprüche, **dadurch gekennzeichnet, dass** die Mittel zum Federn und/oder Dämpfen sich mindestens mittelbar gegen die Grundplatte (6) und gegen die obere Strebe (15) oder die untere Strebe (16) abstützen.

12. Halterung nach einem der vorhergehenden Ansprüche, **dadurch gekennzeichnet, dass** die Mittel zum Federn und/oder Dämpfen sich mindestens mittelbar gegen die obere Strebe (15) und die untere Strebe (16) abstützen.

13. Halterung nach Anspruch 12, **dadurch gekennzeichnet, dass** die Abstützpunkte der Mittel zum Federn und/oder Dämpfen an der Grundplatte (6) und/oder an der oberen Strebe (15) oder an der unteren Strebe (16) einstellbar sind.

14. Halterung nach einem der vorhergehenden Ansprüche, **dadurch gekennzeichnet, dass** die Länge der oberen Strebe (15) und/oder die Länge der unteren Strebe (16) einstellbar ist.

15. Halterung nach einem der vorhergehenden Ansprüche, **dadurch gekennzeichnet, dass** die Grundplatte (6) sich mit ihrem dem Saugelement (2) abgewandten Ende, insbesondere an der geeigneten Oberfläche (29), an der das Saugelement (2) befestigt ist, abstützt.

16. Halterung nach Anspruch 14, **dadurch gekennzeichnet, dass** die Grundplatte (6) einen in seiner Länge verstellbaren Stützfuß (30) aufweist, und dass sich die Grundplatte (6) über den Stützfuß (30) abstützt.

## Claims

1. Holding implement comprising at least one suction element (2) for mounting the holding implement on a suitable surface (29), in particular a smooth, sealed and dimensionally stable surface, and with a tray (1), the position of the at least one suction element (2) and the tray (1) being adjustable relative to one another, **characterized in that** the at least one suction element (2) and the tray (1) are flexibly connected with one another by an upper strut (15) and a lower strut (16) running substantially parallel thereto, whereby a means (17) is provided for cushioning and/or dampening the relative motion between tray (1) and suction element (2).

2. Holding implement according to Claim 1, **characterised in that** the suction element (2) is firmly connected to a base (6), whereby the upper strut (15) and the lower strut (16) are pivoted at least indirectly in the base (6).

3. Holding implement according to Claim 2, **characterised in that** a pivoted third strut (18) is arranged on the base (6), whereby the upper strut (15) and the lower strut (16) are pivoted (21, 22) in the third strut (18).

4. Holding implement according to Claim 3, **characterised in that** means are provided for locking the third strut (18) relative to the base (6).

5. Holding implement according to Claim 4, **characterised in that** the means for locking the third strut (18) has a clamping plate (24) firmly connected to the third strut (18) and a clamping lever (5) mounted on the base (6), whereby frictional engagement between clamp plate (24) and base (6) can be produced with the clamping lever.

6. Holding implement according to anyone of the preceding claims, **characterised in that** the tray (1) is connected to a fourth strut (9), whereby the upper strut (15) and the lower strut (16) are pivoted (10) in the fourth strut (6).

7. Holding implement according to Claim 6, **characterised in that** the tray (1) relative to the fourth strut (9) is rotatably connected thereto, whereby means are provided for locking the tray (1) relative to the fourth strut (9).

8. Holding implement according to Claim 7, **characterised in that** the means for locking the fourth strut (18) comprises a wing nut (7) arranged on the fourth strut (9), whereby frictional engagement between fourth strut (9) and tray (1) can be produced with the wing nut (7).

9. Holding implement according to anyone of the preceding claims, **characterised in that** the suction element or elements (2) can be fixed mechanically (4) and/or with a vacuum pump, in particular one or several battery-operated electric vacuum pumps, to a suitable surface (29).

10. Holding implement according to anyone of the preceding claims, **characterised in that** the means for cushioning and/or dampening the relative motion between tray (1) and suction element (2) comprises a pneumatic spring (17) or a flat coil spring.

11. Holding implement according to anyone of the preceding claims, **characterised in that** the means for cushioning and/or dampening are supported at least indirectly against the base (6) and against the upper strut (15) or the lower strut (16).

12. Holding implement according to anyone of the preceding claims, **characterised in that** the means for cushioning and/or dampening are supported at least indirectly against the upper strut (15) and the lower strut (16).

13. Holding implement according to Claim 12, **characterised in that** the support points of the means for cushioning and/or dampening on the base (6) and/or on the upper strut (15) or on the lower strut (16) are adjustable.

14. Holding implement according to anyone of the preceding claims, **characterised in that** the length of the upper strut (15) and/or the length of the lower strut (16) is adjustable.

15. Holding implement according to anyone of the preceding claims, **characterised in that** the base (6) with its end facing away from the suction element (2), is supported in particular on the suitable surface (29), on which the suction element (2) is mounted.

16. Holding implement according to Claim 14, **characterised in that** the base (6) has a screw jack (30) variable in its length, whereby the base (6) is supported by means of the screw jack (30).

## Revendications

1. Support comportant au moins un élément d'aspiration (2) pour fixer le support sur une surface adaptée (29), en particulier une surface lisse, étanche aux gaz et indéformable, et comportant une tablette (1), où la position relative du au moins un élément d'aspiration (2) et de la tablette (1) étant réglable l'un par rapport à l'autre, **caractérisé en ce que** le au moins un élément d'aspiration (2) et la tablette (1) sont reliés entre eux de manière articulée par un montant supérieur (15) et un montant inférieur (16) essentiellement parallèle à celui-ci et **en ce qu'**un moyen (17) est prévu pour faire ressort et/ou amortir le mouvement relatif entre la tablette (1) et l'élément d'aspiration (2).

2. Support selon la revendication 1, **caractérisé en ce que** l'élément d'aspiration (2) est relié de manière fixe à une plaque de base (6) et **en ce que** le montant supérieur (15) et le montant inférieur (16) sont montés de manière à pouvoir tourner au moins indirectement dans la plaque de base (6).

3. Support selon la revendication 2, **caractérisé en ce qu'**un troisième montant (18) est agencé sur la plaque de base (6) en étant monté de manière à pouvoir tourner et **en ce que** le montant supérieur (15) et le montant inférieur (16) sont montés de manière à pouvoir tourner dans le troisième montant (18).

4. Support selon la revendication 3, **caractérisé en ce que** des moyens sont prévus pour bloquer le troisième montant (18) par rapport à la plaque de base (6).

5. Support selon la revendication 4, **caractérisé en ce que** les moyens de blocage du troisième montant (18) comportent une rondelle de serrage (24) reliée de manière fixe au troisième montant (18) et un levier de serrage (5) fixé sur la plaque de base (6) et **en ce qu'**un assemblage solidaire par frottement peut être créé avec le levier de serrage entre la rondelle de serrage (24) et la plaque de base (6).

6. Support selon l'une des revendications précédentes, **caractérisé en ce que** la tablette (1) est reliée à un quatrième montant (9) et **en ce que** le montant supérieur (15) et le montant inférieur (16) sont montés de manière à pouvoir tourner dans le quatrième montant (9).

7. Support selon la revendication 6, **caractérisé en ce que** la tablette (1) est reliée au quatrième montant (9) de manière à pouvoir tourner par rapport à celui-ci et **en ce qu'**il est prévu des moyens pour bloquer la tablette (1) par rapport au quatrième montant (9).

8. Support selon la revendication 7, **caractérisé en ce que** les moyens de blocage du quatrième montant (9) comprennent un écrou papillon (7) agencé sur le quatrième montant (9) et **en ce qu'**un assemblage solidaire par frottement peut être créé avec l'écrou papillon (7) entre le quatrième montant (9) et la tablette (1).

9. Support selon l'une des revendications précédentes, **caractérisé en ce que** le ou les éléments d'aspiration (2) peuvent être fixés sur une surface adaptée (29) mécaniquement (4) et/ou avec une pompe à vide, en particulier une ou plusieurs pompes à vide électriques alimentées par batterie.

10. Support selon l'une des revendications précédentes, **caractérisé en ce que** les moyens pour faire ressort et/ou amortir le mouvement relatif entre la tablette (1) et l'élément d'aspiration (2) comprennent un ressort à gaz (17) ou un ressort en spirale.

11. Support selon l'une des revendications précédentes, **caractérisé en ce que** les moyens pour faire ressort et/ou amortir s'appuient au moins indirectement contre la plaque de base (6) et contre le montant supérieur (15) ou le montant inférieur (16).

12. Support selon l'une des revendications précédentes, **caractérisé en ce que** les moyens pour faire ressort et/ou amortir s'appuient au moins indirectement contre le montant supérieur (15) et le montant inférieur (16).

13. Support selon la revendication 12, **caractérisé en ce que** les points d'appui des moyens pour faire ressort et/ou amortir sont réglables sur la plaque de base (6) et/ou sur le montant supérieur (15) ou sur le montant inférieur (16).

14. Support selon l'une des revendications précédentes, **caractérisé en ce que** la longueur du montant supérieur (15) et/ou la longueur du montant inférieur (16) sont réglables.

15. Support selon l'une des revendications précédentes, **caractérisé en ce que** la plaque de base (6) s'appuie avec son extrémité opposée à l'élément d'aspiration (2) en particulier sur la surface adaptée (29) sur laquelle l'élément d'aspiration (2) est fixé.

16. Support selon la revendication 14, **caractérisé en ce que** la plaque de base (6) comporte un pied de support (30) réglable dans sa longueur et **en ce que** la plaque de base (6) s'appuie par l'intermédiaire du pied de support (30).
